# EUROPÄISCHE PATENTSCHRIFT

(11) **EP 0 918 829 B1**
(45) Veröffentlichungstag und Bekanntmachung des Hinweises auf die Patenterteilung: **27.03.2002**
(21) Anmeldenummer: 97934528.7
(22) Anmeldetag: 24.07.1997
(51) Int. Cl.: C09D 179/08, H01B 3/30

(54) **DRAHTLACKE, ENTHALTEND POLYESTERIMIDE UND/ODER POLYAMIDIMIDE MIT POLYOXYALKYLENDIAMINEN ALS MOLEKULARE BAUSTEINE**
WIRE ENAMELS CONTAINING POLYESTER IMIDES AND/OR POLYAMIDE IMIDES WITH POLYOXYALKYLENE DIAMINES AS MOLECULAR ELEMENTS
EMAIL ISOLANT CONTENANT DES POLYESTER-IMIDES ET/OU DES POLYAMIDE-IMIDES AVEC DES POLYOXYALKYLENE-DIAMINES COMME CONSTITUANTS MOLECULAIRES

(30) Priorität: 09.08.1996 DE 19632175
(43) Veröffentlichungstag der Anmeldung: 02.06.1999
(73) Patentinhaber: SCHENECTADY INTERNATIONAL, INC., Schenectady New York 12309 (US)
(72) Erfinder: LIENERT, Klaus-Wilhelm, D-22763 Hamburg (DE); SCHMIDT, Gerold, D-22145 Hamburg (DE); LEHMANN, Helmut, D-21465 Reinbek (DE)
(74) Vertreter: Fitzner, Uwe, Dr.
(86) Internationale Anmeldenummer: EP9704002
(87) Internationale Veröffentlichungsnummer: WO9806790

(56) Entgegenhaltungen:
- EP-A- 0 270 790
- WO-A-88/09359
- US-A- 4 199 651
- US-A- 4 208 464

## Beschreibung

### Gebiet der Erfindung

Die Erfindung betrifft Drahtlacke, insbesondere für starke Rund- und Profildrähte, mit einer verbesserten Haftung auf dem Draht, enthaltend als Bindemittel Polyesterimidharze und/oder Polyamidimidharze, welche als Monomerbausteine Polyoxyalkylendiamine mit endständigen Aminogruppen enthalten.

### Stand der Technik

Die heute üblicherweise eingesetzten Drahtlacke sind im allgemeinen Lösungen der typischen Drahtlackbindemittel, wie beispielsweise Polyester, Polyesterimide und Polyurethanharze in organischen Lösemitteln, gegebenenfalls in Kombination mit handelsüblichen Kohlenwasserstoffverschnitten.
Für die Anwendung auf Drähten mit kleinem bis mittleren Durchmessern sind diese Lacke in ausreichend guter Qualität auf dem Markt vorhanden. An Drahtlacke, die für die Beschichtung von starken Runddrähten oder für Profildrähte eingesetzt werden, werden hingegen, im Vergleich zu den Standardlacken, besonders hohe Anforderungen an die Haftung gestellt.

Für die Drahtlackierung eingesetzte Polyesterimidlacke sind beispielsweise aus der DE-OS 1445263 und 1495100 sowie WO 91/07469 (PCT-EP 90/01911) bekannt. Sie haben aufgrund ihrer guten mechanischen, thermischen und chemischen Eigenschaften eine breite Verwendung in der Lackdrahtindustrie gefunden. Die Herstellung der Polyesterimide erfolgt dabei in bekannter Weise aus Polyolen, Polycarbonsäuren oder deren Derivaten und imidbildenden Komponenten. Solche Drahtlacke genügen im allgemeinen den genannten hohen Anforderung an die Haftung auf starken Rund- oder Profildrähten nur bedingt.

Ebenfalls bekannt sind für die Drahtlackierung als Bindemittel verwendete Polyamidimide, die beispielweise in US-PS 3,554,984, DE-A-24 41 020, DE-A-25 56 523, DE-A-12 66 427 und DE-A-19 56 512 beschrieben sind. Wiederum liegt bei solchen Polyamidimid-Drahtlacken nur eine bedingte Erfüllung der obengenannten Anforderungen an die Haftung vor.

Aus dem Stand der Technik sind weiterhin Polyimide bekannt, die Polyoxyalkylendiamine als molekulare Bausteine enthalten.
In der US-PS 4,116,937 wird Jeffamine® ED 900, ein aminterminiertes Polyethylenpolypropylenglykol, durch Reaktion mit Maleinsäureanhydrid zu einem Bismaleinimid umgesetzt. In einer, noch andere Bismaleinimide enthaltenden, Formulierung wird das Material in einem aufwendigen Verfahren auf einen Kupferleiter extrudiert und bei 300 bis 400 Grad F ausgehärtet. Ein solches Verfahren ist für die Beschichtung von Drähten praktisch ungeeignet.
Die EP-A-0 329 833 beschreibt die Herstellung eines Heißklebers aus einem Addukt aus Polyoxyalkylendiamin und Trimellithsäureanhydrid mit einem Alkylendiamin. Solche Heißkleber sind für die Beschichtung von Drähten ungeeignet.
In der EP-A-0 281 003 wird ein flammwidriges Elastomer für Spritzgußanwendungen, enthaltend ein Reaktionsprodukt aus einem Addukt aus Polyoxyalkylendiamin, Alkandiol, Trimellithsäureanhydrid und Dimethylterephthalat sowie aus Melamin beschrieben. Vergleichbare Reaktionsprodukte ohne die Reaktionskomponente Melamin sind in der EP-A-0 270 790 beschrieben.

Ein synthetischer Kautschuk der aus dem Reaktionsprodukt aus Polyoxyalkylendiamin, Trimellithsäureanhydrid, einer dimeren Fettsäure und 1,4-Butandiol besteht, wird in der US-PS 4,544,734 beschrieben. Der Kautschuk hat gute thermische Eigenschaften, ist chemisch beständig und läßt sich extrudieren.

Im Journal Appl. Polym. Sci. (1982), 27 (11), Seiten 4295 bis 4311 wird schließlich ein Polyimid beschreiben, daß ebenfalls Polyoxyalkylendiamin als monomeren Baustein enthält.

Überzugsmittel auf der Basis von Polyesteramiden oder Polyamidimiden, die als monomere Bausteine Polyoxyalkylendiamine enthalten sind z.B. aus der EP-A-180149 oder der JP-A-60-158222 bekannt, wobei in diesen Schriften jedoch keine Drahtlacke beschrieben sind.

Aus der JP-A-62-135569 sind Backlacke bekannt, welche auf der Basis von Polyetherimiden mit aromatischer Brückenstruktur erhalten werden.

### Aufgabe und Lösung

Die der vorliegenden Erfindung zugrundeliegende Aufgabe bestand somit darin, Drahtbeschichtungsmittel zur Verfügung zu stellen, die die Nachteile der bisher bekannten Beschichtungsmittel vermeiden.
Die erfindungsgemäßen Drahtbeschichtungsmittel sollten lagerstabil sein, eine sehr gute Haftung, insbesondere auf starken Rund- und Profildrähten, einen hohen Wärmedruck sowie einen ausreichenden Wärmeschock aufweisen. Außerdem sollen die Drahtbeschichtungsmittel einen möglichst hohen Festkörpergehalt bei einer für die Verarbeitung günstigen Viskosität aufweisen.

Diese Aufgabe wird überraschend durch Drahtbeschichtungsmittel erreicht, enthaltend als Bindemittel Polyesterimid, Polyamidimid oder Polyesterimid und Polyamidimid, dadurch gekennzeichnet, daß das Polyesterimid und das Polyamidimid als monomeren Baustein Polyoxyalkylendiamin mit endständigen Aminogruppen enthält, wobei in dem Falle, daß als Bindemittel Polyamidimid ohne Polyesterimid eingesetzt wird, das Polyamidimid mit Diisocyanat-Bausteinen hergestellt wird und dabei 0,5 bis 50 Mol-%, bezogen auf das Diisocyanat, durch Polyoxyalkylendiamin substituiert sind. Oder alternativ in dem Falle, daß Polyesterimid und Polyamidimid als Bindemittel eingesetzt werden; das Polyamidimid mit Diisocyanat-Bausteinen hergestellt wird und dabei 0,5 bis 50 Mol-%, bezogen auf das Diisocyanat, durch Polyoxyalkylendiamin substituiert sind.

Vorzugsweise sind die Polyoxyalkylendiamine ausgewählt aus der Gruppe Polyoxyethylendiamin, Polyoxypropylendiamin und Polyoxyethylenpropylendiamin. Die Polyoxyalkylendiamine ersetzen dabei die üblicherweise für die Synthese der Polyesterimide und/oder der Polyamidimide verwendeten Diamine und/oder Diisocyanate teilweise oder vollständig.
In weiteren bevorzugten Ausführungsformen der Erfindung enthalten die Drahtlacke 0,5 bis 5 Gew.-% eines Phenolharzes, bzw., im Falle eines Polyamidimid-Bindemittels, eines Phenolharzes und/oder eines Melaminharzes, 0 bis 2,5 Gew.-% Katalysatoren, organische Lösemittel oder Lösemittelgemische sowie gegebenenfalls übliche Additive oder Hilfsmittel.

Besonders bevorzugt sind Drahtlacke auf der Basis der erfindungsgemäßen Polyesterimide, aufgebaut aus:
- (A): 35 bis 55 Gew.-%: des Polyesterimidharzes,
- (B): 0,1 bis 1,5 Gew.-%: des Katalysators,
- (C) :: organischem Lösemittel oder Lösemittelgemisch,
- (D): 1 bis 4 Gew.-%: des Phenolharzes und/oder Melaminharzes, sowie
- (E): 0 bis 1 Gew.-%: an üblichen Additiven und Hilfsmitteln,
wobei die Summe der Komponenten (A) bis (E) 100 Gew.-% des Drahtlacks ausmacht.

Weiterhin besonders bevorzugt sind Drahtlacke auf der Basis der erfindungsgemäßen Polyamidimide, aufgebaut aus:
- (F): 25 bis 35 Gew.-%: des Polyamidimidharzes,
- (G): 0 bis 1,5 Gew.-%: des Katalysators,
- (H):: organischem Lösemittel oder Lösemittelgemisch ,
- (I): 1 bis 4 Gew.-%: des Phenolharzes und/oder des Melaminharzes, sowie
- (K) : 0 bis 1 Gew.-%: an üblichen Additiven und Hilfsmitteln,
wobei die Summe der Komponenten (F) bis (K) 100 Gew.-% des Drahtlacks ausmacht.

### Durchführung der Erfindung

**Die erfindungsgemäßen Polyesterimide, Drahtlacke enthaltend solehe Polyesterimide, sowie die Applikation solcher Drahtlacke**

Als erfindungswesentlichen Bestandteil enthalten die für die Drahtlacke verwendeten Polyesterimide Polyoxyalkylendiamine mit endständigen Aminogruppen als monomere Bausteine. 8evorzugt werden Polyoxyethylen-, Polyoxypropylen- und/oder Polyoxyethylenpropylendiamine mit endständigen Aminogruppen eingesetzt.

Solche Polyoxyalkylendiamine sind an sich bekannte, handelsübliche Produkte. Zu den bekanntesten gehören die Polyoxyethylendiamine, die unter dem Namen Jeffamine® vertrieben werden. Das Molekulargewicht wird durch die Zahl angegeben die sich in der Bezeichnung befindet. So stellt beispielsweise Jeffamine® D 400 ein Polyoxypropylendiamin mit einem mittleren Molekulargewicht von 400 Dalton dar.

Im erfindungsgemäßen Polyesterimid wird das Diamin, beispielsweise 4,4'-Diaminodiphenylmethan, das zu 0,5 bis 100 Gew.-%, bevorzugt zwischen 1 und 95 Gew.-%, bezogen auf das eingesetzte Diamin, durch ein Polyoxyalkylendiamin ersetzt ist, mit Trimellithsäureanhydrid zur entsprechenden Diimiddicarbonsäure umgesetzt. Diese wird dann mit weiteren Komponenten zum Polyesterimid umgesetzt.

Für die Herstellung der erfindungsgemäßen Polyesterimide geeignete Alkohole sind insbesondere Diole und Triole. Beispiele sind Ethylenglykol, 1,2- und 1,3-Propylenglykol, 1,2-, 1,3- und 1,4-Butandiol, 1,5-Pentandiol, Neopentylglykol, Diethylenglykol, Triethylenglykol, Glycerin, Trimethylolethan, Trimethylolpropan und Tris-2-Hydroxyethylisocyanurat. Das zuletzt genannte Triol kommt für die erfindungsgemäßen Polyesterimide bevorzugt zum Einsatz. Dessen Verwendung führt zu besonders hohen Erweichungstemperaturen des Drahtlacks.
Besonders bevorzugt wird der Einsatz eines Gemisches von Diolen und Triolen. Hier kommen insbesondere Gemische von Ethylenglykol und Tris-2-Hydroxyethylisocyanurat zum Einsatz.

Geeignete Carbonsäuren für die Herstellung der erfindungsgemäßen Polyesterimide sind aromatische Säuren, bzw. deren Derivate, wie beispielsweise Phthalsäure, Isophthalsäure, Terephthalsäure, 2,6-Naphthalindicarbonsäure, sowie deren veresterbare Derivate, z.B. Anhydride und die niederen Alkylester der genannten Säure, z.B. Methyl-, Ethyl-, Propyl-, Butyl-, Amyl-, Hexyl- und Octylester. Einsetzbar sind auch hier sowohl die Halbester, die Diacylester wie auch die Mischungen dieser Verbindungen. Ebenso kommen auch die Säurehalogenide in Betracht.
In Frage kommen erfindungsgemäß auch aliphatische Dicarbonsäuren, z.B. Oxalsäure, Malonsäure, Bernsteinsäure, Glutarsäure, Adipinsäure, Pimelinsäure, Acelainsäure, Sebacinsäure, Maleinsäure, Fumarsäure oder Sorbinsäure, sowie deren veresterbare oder umesterbare Derivate.

Die erfindungsgemäßen Polyesterimide enthalten bevorzugt imidhaltige Ausgangsstoffe oder Bausteine, die für die guten thermischen Eigenschaften verantwortlich sind.
Die imidgruppenhaltigen Ausgangsstoffe können beispielsweise durch Reaktion zwischen Verbindung erhalten werden, von denen die eine fünfgliedrige, cyclische Carbonsäureanhydridgruppierung sowie mindestens eine weitere funktionelle Gruppe besitzt, während die andere außer einer primären Aminogruppe noch mindestens eine weitere funktionelle Gruppe enthält. Diese weiteren funktionellen Gruppen sind vor allem Carboxylgruppen oder Hydroxylgruppen. Es können aber auch weitere primäre Aminogruppen oder carbonsäureanhydridgruppen zum Einsatz kommen.
Beispiele für Verbindungen mit einer cyclischen Carbonsäureanhydridgruppierung und weiteren funktionellen Gruppen sind vor allem Pyromellithsäuredianhydrid und Trimellithsäureanhydrid. Es kommen jedoch auch andere aromatische Carbonsäureanhydride in Frage, beispielsweise die Naphthalintetracarbonsäuredianhydride oder Dianhydride von Tetracarbonsäuren mit zwei Benzolkernen im Molekül, bei denen die Carboxylgruppen in 3-, 3'-, 4- und 4'-Stellung stehen.

Beispiele für Verbindungen mit primären Aminogruppen sind insbesondere diprimäre Diamine, z.B. Ethylendiamin, Tetramethylendiamin, Hexamethylendiamin, Nonamethylendiamin und andere aliphatische diprimäre Diamine.
Ferner kommen aromatische diprimäre Diamine, wie Benzidin, Diaminodiphenylmethan, Diaminodiphensulfon, -sulfoxid, -ether, -thioether, Phenylendiamine, Toluylendiamine sowie Diamine mit drei Benzolkernen im Molekül, z.B. Bis(4-aminophenoxy)-1,4-benzol in Betracht.
In Frage kommen schließlich cycloaliphatische Diamine, wie z.B. das 4,4',-Dicyclohexylmethandiamin.
Als aminogruppenhaltige Verbindungen mit einer weiteren funktionellen Gruppe sind ferner auch Aminoalkohole verwendbar, z.B. Monoethanolamin und Monopropanolamine, weiterhin Aminocarbonsäuren wie Glycin, Aminopropansäure, Aminocapronsäuren oder Aminobenzoesäuren.

Zur Herstellung der erfindungsgemäßen Polyesterimide werden die bekannten Katalysatoren verwendet, wie beispielsweise Schwermetallsalze, organische Titanate, Cerverbindungen sowie organische Säuren, wie p-Toluolsulfonsäure.
Beispiele für Schwermetallsalze sind Bleiacetat und Zinkacetat. Zu den einsetzbaren Titanaten gehören beispielsweise Tetramethyltitanat, Tetraethyltitanat, Tetraisopropyltitanat, Tetrapropyltitanat, Tetrabutyltitanat, Tetraamyltitanat, Tetrahexyltitanat, Diisopropyldibutyltitanat oder Amyltitanate wie Tetraphenyltitanat, Tetrakresyltitanat, Tetrahexyltitanat oder auch Triethanolamintitanat. Beispielhaft für organische Säuren sei p-Toluolsulfonsäure genannt.

Die Mengen der einzelnen Komponenten werden so gewählt, daß nach der Bindemittelsynthese das Polyesterimid eine OH-Zahl hat, das heißt, daß die Polyesterimid-Polymere Hydroxylgruppen aufweisen.

Das übliche Verfahren zur Herstellung der Polyesterimide erfolgt dadurch, daß die Alkohol-, Carbonsäure- und Imidkomponenten in einem organischen Lösemittel, vorzugsweise Kresol, kondensiert werden.

Die Drahtlacke können die erfindungsgemäßen Polyesterimide in Mengen von 15 bis 75 Gewichts %, bevorzugt 35 bis 55 Gewichts %, bezogen auf das Gesamtgewicht des Drahtlacks enthalten.

Eine Modifizierung dieses Herstellungsverfahrens besteht darin, daß das Polyesterimid in der Schmelze kondensiert und die erfindungsgemäßen Drahtlacke durch Lösen der Polyesterharze in einem organischen Lösemittel hergestellt werden. Für die erfindungsgemäßen Drahtlacke geeignete organische Lösemittel sind kresolische und nichtkresolische organische Lösemittel. Beispiele sind Kresol, Phenol, Glykolether, Dimethylglykol, Ethylglykol, Isopropylglykol, Butylglykol, Methyldiglykol, Ethyldiglykol, Butyldiglykol, Phenylglykol. In Betracht kommen auch Glykoletherester, beispielsweise Methylglykolacetat, Ethylglykolacetat, Butylglykolaceat und Methoxypropylacetat.
Weitere Beispiele für organische Lösemittel sind cyclische carbonate, z.B. Polypropylencarbonat, cyclische Ester wie z.B. Gamma-Butyrolacton sowie Dimethylformamid, N,N-Dimethylacetamid und N-Methylpyrrolidon. Weiterhin können auch aromatische Lösemittel, Benzylalkohol, gegebenenfalls in Kombination mit den genannten Lösemitteln eingesetzt werden. Die organischen Lösemittel können teilweise durch Verschnittmittel ersetzt werden. Vorzugsweise werden entweder reines Lösemittel bzw. reines Lösemittelgemisch oder Lösemittel mit bis zu 40 Gew.-%, bezogen auf deren Gesamtgewicht, Verschnittmittel verwendet. Beispiele für geeignete Verschnittmittel sind Xylol, Solventnaphtha®, Toluol, Ethylbenzol, Cumol, Schwerbenzol, verschiedene Solvesso®- und Shellsol®-Typen sowie Deasol®.

Vorteilhafterweise enthalten die erfindungsgemäßen Drahtlacke auf Polyesterimid-Basis 0,5 bis 5 Gew.-%, vorzugsweise 1 bis 4 Gew.-% eines Phenolharzes und/oder Melaminharzes, bezogen auf das Gesamtgewicht des Drahtlacks.
Geeignete Phenolharze sind bekannte Kondensationsprodukte von Phenol, substituierten Phenolen oder Bisphenol-A mit Formaldehyd. Die Eigenschaften der Phenolharze hängen von der Art der Phenolkomponente und der Aldehydkomponente ab, von dem bei der Herstellung eingestellten pH-Wert und vom Mengenverhältnis der beiden Reaktionspartner ab. Selbstverständlich sind neben den Kondensationsprodukten mit Formaldehyd auch solche mit anderen Aldehyden verwendbar.

Als Katalysatoren bei der Aushärtung der Polyesterimide können die schon oben genannten Zinkoktoat, Cadmiumoktoat, Tetrabutyltitanat, Tetraisopropyltitanat oder Tetrakresyltitanat, in einem Anteil bis zu 5 Gewichts %, bevorzugt von 0,1 bis 2,5 Gew.-%, besonders bevorzugt von 0,1 bis 1,5 Gew.-%, bezogen auf den Drahtlack, verwendet werden.

Außerdem können die erfindungsgemäßen Drahtlacke noch übliche Hilfsmittel und Additive, bevorzugt in Mengen bis zu 1 Gew.-%, bezogen auf den Drahtlack, enthalten.

Als Hilfsstoffe für die Drahtlacke können beispielsweise verlaufsverbessernde Melaminharze oder Verlaufsmittel auf Basis von Polyacrylaten eingesetzt werden.

Drahtlacke mit besonders vorteilhaften Eigenschaften setzen sich wie folgt zusammen:
- (A) 35 bis 55 Gewichts %: des erfindungsgemäßen Polyesterimids,
- (B) 0,1 bis 1,5 Gew.-%: des Katalysators,
- (C): organischem Lösemittel bzw. Lösemittelgemisch ,
- (D) 1 bis 4 Gew.-%,: des Phenolharzes und/oder Melaminharzes, sowie
- (E) 0 bis 1 Gew.-%,: an üblichen Additiven und Hilfsmitteln,
wobei die Summe der Komponenten (A) bis (E) 100 Gew.-% des Drahtlacks ausmachen.

Die Polyesterimiddrahtlacke werden mittels üblicher Drahtlackiermaschinen aufgebracht und gehärtet. Dabei wird die jeweils erforderliche Lackfilmstärke durch mindestens 1 bis zu 10 Einzelaufträgen aufgebaut, wobei jeder einzelne Lackauftrag vor dem erneuten Lackauftrag blasenfrei ausgehärtet wird. Übliche Lackiermaschinen arbeiten mit Abzugsgeschwindigkeiten von 5 bis zu 180 m/min, je nach Dicke des zu beschichtenden Drahtes. Typische Ofentemperaturen liegen zwischen 300 und 550 Grad C.

**Die erfindungsgemäßen Polyamidimide, Drahtlacke enthaltend solche Polyamidimide, sowie die Applikation solcher Drahtlacke**

Als erfindungsvesentlichen Bestandteil enthalten die für die Drahtlacke verwendeten Polyamidimide Polyoxyalkylendiamine mit endständigen Aminogruppen als monomere Bausteine. Bevorzugt werden Polyoxyethylen-, Polyoxypropylen- und/oder Polyoxyethylenpropylendiamine mit endständigen Aminogruppen eingesetzt.

Solche Polyoxyalkylendiamine sind an sich bekannte, handelsübliche Produkte. Zu den bekanntesten gehören die Polyoxyethylendiamine, die unter dem Namen Jeffamine® vertrieben werden. Das Molekulargewicht wird durch die Zahl angegeben die sich in der Bezeichnung befindet. So stellt beispielsweise Jeffamine® D 400 ein Polyoxypropylendiamin mit einem mittleren Molekulargewicht von 400 Dalton dar.

So wird beispielweise ein Polyamidimid, das für die erfindungsgemäßen Drahtlacke geeignet ist, aus einem Diisocyanat, beispielweise 4,4'-Diphenylmethandiisocyanat, und Trimellithsäureanhydrid hergestellt, wobei 0,5 bis 50 Mol-%, vorzugsweise 1 bis 45 Mol-%, des Diisocyanats durch das Polyoxyalkylendiamin ersetzt werden.
Dabei ist zu beachten, daß zuerst das Polyoxyalkylendiamin mit dem Anhydrid vollständig zur Diimiddicarbonsäure umgesetzt wird und erst danach das Diisocyanat zugegeben wird.

Mit den erfindungsgemäßen Bindemitteln auf Polyamidimid-Basis erhält man Drahtlacke, die auf Polyester-Grundlacken als zusätzliche Beschichtungen gute Eigenschaften haben. Weiterhin haften solche Drahtlacke auf dem Blankkupfer so gut, daß eine Grundierung nicht notwendig ist. Es können damit nur mit Polyamidimid beschichtete Drähte hergestellt werden, wobei insbesondere starke Runddrähte und Profildrähte für die Anwendung interessant sind.

Für die Herstellung der erfindungsgemäßen Polyamidimide weiterhin wichtige monomere Bausteine sind Polycarbonsäuren oder deren Anhydride, bei denen vorzugsweise zwei Carboxylgruppen in vicinaler Stellung stehen und die mindestens noch eine weitere funktionelle Gruppe besitzen, sowie Polyamine mit wenigstens einer primären, zur Imidbindung fähigen Aminogruppe. Statt der Amingruppe kann auch eine Isocyanatgruppe zur Bildung des Imidringes verwendet werden. Die Polyamidimide können auch durch Umsetzung von Polyamiden, Polyisocyanaten, die mindestens zwei NCO-Gruppen enthalten, und cyclischen Dicarbonsäureanhydriden, die mindestens eine weitere kondensations- oder additionsfähige Gruppe enthalten, gewonnen werden.

Weiterhin ist es auch möglich, die Polyamidimide aus Diisocyanaten oder Diaminen und Dicarbonsäuren herzustellen, wenn eine der Komponenten bereits eine Imidgruppe enthält. So kann insbesondere zuerst ein Tricarbonsäureanhydrid mit einem diprimären Diamin zu der entsprechenden Diimiddicarbonsäure umgesetzt werden, die dann mit einem Diisocyanat zu dem Polyamidimid reagiert.

Für die Polyamidimide werden bevorzugt Tricarbonsäuren, beziehungsweise ihr Anhydride eingesetzt, bei denen zwei Carboxylgruppen in vicinaler Stellung stehen. Bevorzugt sind die entsprechenden aromatischen Tricarbonsäureanhydride, wie z.B. Trimellithsäureanhydrid, Naphthalintricarbonsäureanhydride, Biphenyltricarbonsäureanhydride sowie weitere Tricarbonsäuren mit zwei Benzolkernen im Molekül und zwei vicinalen carboxylgruppen, wie die in DE-OS 19 56 512 aufgeführten Beispiele. Ganz besonders bevorzugt wird Trimellithsäureanhydrid eingesetzt.

Als Aminkonponente können diprimäre Diamine eingesetzt werden. Dabei können auch aromatische Diamine eingesetzt werden, die einen Thiazolring enthalten, wie z.B. 2,5-Bis-(4-aminophenyl)-1,3,4-thiadiazol, 2,5-Bis-(3-aminophenyl)-1,3,4-thiadiazol, 2-(4-aminophenyl)-5-(3-aminophenyl)-1,3,4-thiadiazol sowie Gemische der verschiedenen Isomeren.

Geeignete Diisocyanate für die Herstellung der Polyamidimide sind aliphatische Diisocyanate, wie z.B. Tetramethylen-, Hexamethylen-, Heptamethylen- und Trimethylhexamethylendiisocyanate. Als cycloaliphatische Diisocyanate sind geeignet Isophorondiisocyanat, ω,ω'-Diisocyanat-1,4-dimethylcyclohexan, Cyclohexan-1.3-, Cyclohexan-1,4-, 1-Methylcyclohexan-2,4- und Dicyclohexylmethan-4,4'-diisocyanat. Einsetzbare aromatische Diisocyanate sind z.B. Phenylen-, Toluylen-, Naphthalin- und Xylylendiisocyante sowie substituierte aromatische Systeme, wie z.B. Diphenylether-, Diphenylsulfid-, Diphenylsulphon- und Diphenylmethandiisocyanate. Gemische aus aromatischen und aliphatischen bzw.aus aromatischen und hydroaromatischen Diisocyanaten, wie beispielsweise 4-Phenylisocyanatmethylisocyanat, Tetrahydronaphthylen-1,5-, Hexahydrobenzidin-4,4-diisocyanat, sind ebenfalls geeignet. Vorzugsweise werden 4,4'-Diphenylmethandiisocyanat, 2,4- und 2,6-Toluylendiisocyanat sowie Hexamethylendiisocyanat eingesetzt.

Als Polyamide eignen sich diejenigen Polyamide, die durch Polykondensation von Dicarbonsäuren oder deren Derivate mit Diaminen oder von Aminocarbonsäuren und ihren Derivaten, wie z.B. Lactamen, erhalten worden sind. Beispielhaft seien folgende Polyamide genannt: Dimethylenbernsteinsäureamid, Pentamethylenpimelinsäureamid, Undecanmethylentridecandicarbonsäureamid, Hexamethylenadipinsäureamid, Polycapronsäureamid. Besonders bevorzugt sind Hexamethylenadipinsäureamid und Polycapronsäureamid.

Die Mengen der einzelnen Komponenten werden bevorzugt so gewählt, daß im Ansatz das molare Verhältnis von Isocyanat- zu Carboxylgruppen etwa 1,0 beträgt.

Das übliche Verfahren zur Herstellung der erfindungsgemäßen Polyamidimide erfolgt dadurch, daß die Isocyanat- und Carbonsäurekomponenten in einem organischen Lösemittel, vorzugsweise N-Methylpyrrolidon, zur Reaktion gebracht werden. Der Reaktionsverlauf läßt sich an Hand der entstehenden Kohlendioxidmenge relativ leicht verfolgen. Nach Beendigung der Reaktion wird der Lack mit einem Lösemittel, z.B. N-Methylpyrrolidon und einem Verschnittmittel, z.B. Xylol, auf die gewünschte Lackierviskosität eingestellt.

Die erfindungsgemäßen Drahtlacke können die erfindungsgemäßen Polyamidimide in Mengen von 20 bis 40 Gew.-%, bevorzugt 25 bis 35 Gew.-%, bezogen auf das Gesamtgewicht des Drahtbeschichtungsmittels, enthalten.

Für die erfindungsgemäßen Drahtlacke auf Basis Polyamidimid geeignete organische Lösemittel sind amidische Lösemittel wie N-Methylpyrrolidon sowie andere N-substituierte Pyrrolidone, N,N-Dimethylformamid und N,N-Dimethylacetamid. Weitere Beispiele sind cyclische Carbonate, z.B. Ethylencarbonat, Propylencarbonat und cyclische Ester wie Gamma-Butyrolacton. Weiterhin können auch aromatische Lösemittel, Benzylalkohol oder Kresol, gegebenenfalls in Kombination mit den genannten Lösemitteln eingesetzt werden.
Die organischen Lösemittel können teilweise durch Verschnittmittel ersetzt werden. Vorzugsweise werden entweder reines Lösemittel bzw. reines Lösemittelgemisch oder Lösemittel mit bis zu 40 Gew.-%, bezogen auf deren Gesamtgewicht, Verschnittmittel verwendet. Beispiele für geeignete Verschnittmittel sind Xylol, Solventnaphtha®, Toluol, Ethylbenzol, Cumol, Schwerbenzol, verschiedene Solvesso®- und Shellsol®-Typen sowie Deasol®.

Vorteilhafterweise enthalten die erfindungsgemäßen Drahtlacke auf polyamidiaidbasis 0,5 bis 5 Gew.-%, vorzugsweise 1 bis 4 Gew.-%, eines der oben genannten Phenolharze und/oder eines Melaminharzes.

Als Vernetzungskatalysatoren bei der Aushärtung der Polyamidimide können die schon genannten Zinkoktoat, Cadmiumoktoat, Tetrabutyltitanat, Tetraisopropyltitanat oder Tetrakresyltitanat, in einem Anteil bis zu 5 Gew.-%, besonders bevorzugt von 0 bis 2,5 Gew.-%, besonders bevorzugt von 0 bis 1,5 Gew.-%, bezogen auf den Drahtlack, verwendet werden.

Außerdem können die erfindungsgemäßen Drahtlacke auf Polyamidimid-Basis noch übliche Hilfsmittel und Additive, bevorzugt in Mengen bis zu 1 Gew.-%, bezogen auf den Drahtlack, enthalten. Als Hilfsstoffe für die Drahtlacke können beispielsweise verlaufsverbessernde Melaminharze oder Verlaufsmittel auf Polyacrylat-Basis eingesetzt werden. Insbesondere bewährt haben sich handelsübliche fluorierte Additive.

Drahtlacke mit besonders vorteilhaften Eigenschaften setzen sich wie folgt zusammen:
- (F) 20 bis 40 Gew.-%: des erfindungsgemäßen Polyaimidimids,
- (G) 0 bis 2,5 Gew.-%: des Katalysators,
- (H): organischem Lösemittel, bzw. Lösemittelgemisch,
- (I) 1 bis 4 Gew.-%: des Phenolharzes und/oder des Melaminharzes, sowie
- (K) 0 bis 1 Gew.-%,: des Additives,
wobei die Summe der Komponenten (F) bis (K) 100 Gew.-% des Drahtlacks ausmachen.

Die Polyamidimiddrahtlacke werden mittels üblicher Drahtlackiermaschinen aufgebracht und gehärtet. Dabei wird der Polyamidimidlack üblicherweise als Decklack über einen Polyester- oder Polyesterimidgrundlack lackiert. Dabei wird die jeweils erforderliche Lackfilmstärke durch mindestens 1 bis zu 10 Einzelaufträgen aufgebaut, wobei jeder einzelne Lackauftrag vor dem erneuten Lackauftrag blasenfrei ausgehärtet wird. übliche Lackiermaschinen arbeiten mit Abzugsgeschwindigkeiten von 5 bis zu 180 m/min, je nach Dicke des zu beschichtenden Drahtes. Typische Ofentemperaturen liegen zwischen 300 und 550°C.

Die im folgenden aufgeführten Beispiele sollen die Erfindung erläutern.

### Beispiele

### Beispiel 1: Herstellung eines Drahtlacks D1 enthaltend ein erfindungsgemäßes Polyesterimid PEI1

Aus den monomeren Bausteinen 130.2 g Ethylenglykol, 291.0 g Dimethylterephthalat, 339.3 g Tri-2-hydroxyethylisocyanurat, 384 g Trimellithsäureanhydrid, 434.0 g Jeffamine® D 400 und 0.6 g Tetra-n-Butyltitanat wird das Polyesterimid PEI1 nach üblichem Verfahren hergestellt. Zur Herstellung des erfindungsgemäßen Drahtlacks D1 werden 6 Teile Polyesterimid PEI1 in einem Gemisch aus 9 Teilen Kresol und 1 Teil Solventnaphtha® angelöst und mit 0,3 Teilen Phenolharz sowie 0,1 Teilen Kresyltitanat (Umesterungskatalysator) versetzt. Bei einer Viskosität von 1720 mPas bei 23 Grad C hat der Drahtlack D1 einen Festkörper von 37.0 % (1g/1h/180 Grad C).

### Beispiel 2: Herstellung eines Drahtlacks D2 enthaltend ein erfindungsgemäßes Polyesterimid PEI2

Aus den monomeren Bausteinen 40.9 g Ethylenglykol, 91.5 g Dimethylterephthalat, 120.7 g Trimellithsäureanhydrid, 49.8 g 4,4'-Diaminodiphenylmethan, 27.3 g Jeffamine® D 400 und 0.2 g Tetra-n-butyltitanat wird in 100 g Kresol das Polyesterimidharz PEI2 nach üblichem Verfahren hergestellt. Zur Herstellung des erfindungsgemäßen Drahtlacks D2 werden 2,5 Teile Polyesterimid PEI2 in einem Gemisch aus 3 Teilen Kresol und 1 Teil Solventnaphtha® angelöst und mit 0,1 Teilen Phenolharz sowie 0,02 Teilen Kresyltitanat versetzt. Bei einer Viskosität von 980 mPas bei 23 Grad C hat der Drahtlack D2 einen Festkörper von 38.6 % (1g/1h/180 Grad C).

### Vergleichsbeispiel 1: Herstellung eines Drahtlacks D1' enthaltend ein Polyesterimid PEI1' des Standes der Technik

Aus den aus dem Stand der Technik bekannten monomeren Bausteinen 130.2 g Ethylenglykol, 339.3 g Tris-2-hydroxyethylisocyanurat, 291.0 g Dimethylterephthalat, 384 g Trimellithsäureanhydrid, 198.0 g 4,4'-Diaminodiphenylmethan, 0.6 g Tetra-n-Butyltitanat wird in 150 g Kresol das Polyesterimid PEI1' nach üblichem Verfahren hergestellt. Zur Herstellung des Drahtlacks D1' werden 2,7 Teile Polyesterimid PEI1' in einem Gemisch aus 3 Teilen Kresol und 1 Teil Solventnaphtha ® angelöst und mit 0,1 Teilen Phenolharz und 0,02 Teilen Kresyltitanat versetzt.
Bei einer Viskosität von 830 mPas bei 23 Grad C hat der Drahtlack D1' einen Festkörper von 39.5 % (1g/1h/180 Grad C).

### Beispiel 3: Lackierung der Drahtlacke D1, D2 und D1' auf Kupferdraht und Eigenschaften der resultierenden Lackierungen

Die Drahtlacke D1, D2 und D1' werden unter folgenden Lackierbedingungen auf Kupferdraht aufgetragen:

| | |
|---|---|
| Ofentyp | MAG AW/1A |
| Temperatur | 520 Grad C |
| Auftragssystem | Düsen |
| Drahtdurchmesser | 1.12 mm |
| Abzugsgeschwindigkeit | 19 m/min |
| Zahl der Durchzüge | 10 |
| Zunahmegrad | 2 L |

Die lackierten Drähte werden nach IEC 851 geprüft. Die Verbesserung der Haftung der erfindungsgemäßen Drahtlacke D1 und D2 im Vergleich zum Drahtlack des Standes der Technik D1' wird durch die Erhöhung des Peel-Test-Wertes veranschaulicht (Tabelle 1).

**Tabelle 1:**

| Lackierergebnisse der Drahtlacke D1, D2 und D1' | | | |
|---|---|---|---|
| Drahtlack/ Eigenschaft: | D1 (*) | D2 | D1' |
| Durchmesser-Zunahme (mm) | 0.085 | 0.077 | 0.069 |
| Aussehen der Oberfläche | gut | gut | gut |
| Außenfaser- dehung 1*d+x (%) | 20 | 25 | 15 |
| Wärmeschock 1*d/x (Grad C) | 200 | 170 | 200 |
| Wärmedruck (Grad C) | 385 | 380 | 385 |
| Tg(delta) Steilanstieg (Grad C) | 181 | 174 | 190 |
| Peel test (Umdrehungen) | 215 | 195 | 170 |

| | | | |
|---|---|---|---|
| * Lackierung des Drahtlacks D1 mit einem Durchzug als Grundierung und neun Durchzügen Drahtlack D1' | | | |

### Beispiel 4: Herstellung eines Drahtlacks D3 enthaltend ein erfindungsgemäßes Polyamidimid PAI1

Zur Herstellung des erfindungsgemäßen Polyamidimids PAI1 werden die monomeren Bestandteile 384.0 g Trimellithsäureanhydrid, 434.0 g Polyoxyethylendiamin Jeffamin® D 400, 150 g Xylol und 735 g N-Methylpyrrolidon erwärmt, das entstehende Reaktionswasser und das Xylol abdestilliert, und danach der Ansatz auf 30 Grad C abgekühlt. Hiernach wird als weiterer monomerer Baustein 285.0 g 4,4-Diphenylmethandiisocyanat zugegeben und der Ansatz mit 10 Grad C pro Stunde auf 150 Grad C hochgeheizt. Bei dieser Temperatur wird der Ansatz so lange gehalten, bis kein Kohlendioxid mehr entsteht.
Zur Herstellung des erfindungsgemäßen Drahtlacks D3 wird der Ansatz, enthaltend das Polyamidimid PAI1, mit 700 g N-Methylpyrrolidon und 300 g xylol verdünnt. Weiterhin werden 35 g Melaminharz zugegeben.
Der solchermaßen erhaltene Drahtlack D3 hat bei einer Viskosität von 2300 mPas bei 23 Grad C einen Festkörper von 35,8% (1g, 1h, 200 Grad C).

### Beispiel 5: Herstellung eines Drahtlacks D4 enthaltend ein erfindungsgemäßes Polyamidimid PAI2

Zur Herstellung des erfindungsgemäßen Polyamidimids PAI2 werden die monomeren Bestandteile 38.4 g Trimellithsäureanhydrid, 91.1 g Jeffamin® D 400, 30 g Xylol und 735 g N-Methylpyrrolidon erwärmt, das entstehende Reaktionswasser und das Xylol abdestilliert und danach der Ansatz auf 30 Grad C abgekühlt. Hiernach werden als weitere monomere Bausteine 345.6 g Trimellithsäureanhydrid und 482.5 g 4,4 -Diphenylmethandiisocyanat zugegeben und der Ansatz mit 10 GradC pro Stunde wird auf 150 Grad C hochgeheizt. Bei dieser Temperatur wird der Ansatz, so lange gehalten, bis kein Kohlendioxid mehr entsteht.

Zur Herstellung des erfindungsgemäßen Drahtlacks D3 wird der Ansatz, enthaltend das Polyamidimid PAI2, mit 700 g N-methylpyrrolidon und 300 g Xylol verdünnt. Weiterhin werden 30 g Melaminharz zugegeben.
Der solchermaßen erhaltene Drahtlack D3 hat bei einer Viskosität von 660 mPas bei 23 Grad C einen Festkörper (1g, 1h, 200°C) von 31.0 %.

### Vergleichsbeispiel 2: Herstellung eines Drahtlacks D2' enthaltend ein Polyamidimid PAI1' des Standes der Technik

Zur Herstellung des Polyamidimids PAI1' des Standes der Technik werden bei einer Temperatur von unter 30 Grad C die monomeren Bausteine 115.5 g Trimellithsäureanhydrid, 160.5 g Diphenylmethandiisocyanat und 220.5 g N-Methylpyrrolidon gemischt und der Ansatz mit 10 Grad C pro Stunde auf 150 Grad C hochgeheizt. Bei dieser Temperatur wird der Ansatz so lange gehalten, bis kein Kohlendioxid mehr entsteht. Zur Herstellung des Drahtlacks D2' wird der Ansatz, enthaltend das Polyamidimid PAI1', mit 210 g N-methylpyrrolidon und 90 g Xylol verdünnt. Weiterhin werden 10 g Melaminharz zugegeben.
Der solchermaßen erhaltene Drahtlack D2' hat bei einer Viskosität von 430 mPas bei 23 Grad C einen Festkörpergehalt (1g, 1h, 200°C) von 29.7%.

### Beispiel 6: Lackierung der Drahtlacke D3, D4 und D2' auf Kupterdraht und Eigenschaften der resultierenden Lackierungen

Die Drahtlacke D3, D4 und D2' werden unter folgenden Lackierbedingungen auf Kupferdraht aufgetragen:

| | |
|---|---|
| Ofentyp | MAG AW/1A |
| Temperatur | 520°C |
| Auftragssystem | Düsen |
| Drahtdurchmesser | 1.12 mm |
| Abzugsgeschwindigkeit | 18.5 m/min |
| Zahl der Durchzüge | 10 |
| Zunahmegrad | 2 L |

Die lackierten Drähte werden nach IEC 851 geprüft. Die Verbesserung der Haftung der erfindungsgemäßen Drahtlacke D3 und D4 im Vergleich zum Drahtlack des Standes der Technik D2' wird durch die Erhöhung des Peel-Test-Wertes veranschaulicht (Tabelle 2).

**Tabelle 2:**

| Lackierergebnisse der Drahtlacke D3, D4 und D2' | | | |
|---|---|---|---|
| Drahtlack/ Eigenschaft | D3 (*) | D4 | D2' |
| Durchmesser-Zunahme (mm) | 0.080 | 0.077 | 0.061 |
| Oberfläche | gut | gut | - (#) |
| **Außenfaser-** dehnung 1*d+x (%) | 20 | 20 | - (#) |
| **Wärmeschock** 1*d/ x (Grad C) | 300 | 300 | - (#) |
| **Wärmedruck** (Grad C) | 360 | 320 | - (#) |
| Tg(delta) Steilanstieg (Grad C) | 215 | 210 | - (#) |
| Peel test (Umdrehungen) | 130 | 125 | - (#) |

| | | | |
|---|---|---|---|
| * Lackierung des Drahtlacks D3 mit einem Durchzug als Grundierung und neun Durchzügen Drahtlack D2' | | | |
| # Der Drahtlack D2' konnte nicht in einer Qualität auf den blanken Kupferdraht lackiert werden, die eine Prüfung ermöglichte. Verlauf und Haftung waren unzureichend. | | | |

## Patentansprüche

1. Drahtlack, enthaltend als Bindemittel Polyesterimid, Polyamidimid oder Polyesterimid und Polyamidimid, **dadurch gekennzeichnet, daß** das Polyesterimid und das Polyamidimid als monomeren Baustein Polyoxyalkylendiamin mit endständigen Aminogruppen enthält, wobei in dem Falle, daß als Bindemittel Polyamidimid ohne Polyesterimid eingesetzt wird, das Polyamidimid mit Diisocyanat-Bausteinen hergestellt wird und dabei 0,5 bis 50 Mol-%, bezogen auf das Diisocyanat, durch Polyoxyalkylendiamin substituiert sind.

2. Drahtlack gemäß Anspruch 1, **dadurch gekennzeichnet, daß** in dem Falle, daß Polyesterimid und Polyamidimid als Bindemittel eingesetzt werden, das Polyamidimid mit Diisocyanat-Bausteinen hergestellt wird und dabei 0,5 bis 50 Mol-%, bezogen auf das Diisocyanat, durch Polyoxyalkylendiamin substituiert sind.

3. Drahtlack, gemäß Anspruch 1 oder 2, **dadurch gekennzeichnet, daß** das Polyoxyalkylendiamin mit endständigen Aminogruppen ausgewählt ist aus der Gruppe Polyoxyethylendiamin, Polyoxypropylendiamin und/oder Polyoxyethylenpropylendiamin.

4. Drahtlack nach einem der Ansprüche 1 bis 3, **dadurch gekennzeichnet, daß** die im Polyesterimid anwesenden monomeren Diamin-Bausteine zu 0,5 bis 100 Gew.-% bezogen auf die Diamin-Bausteine, aus dem Polyoxyalkylendiamin nach einem der Ansprüche 1 oder 3 bestehen.

5. Drahtlack nach Anspruch 4, **dadurch gekennzeichnet, daß** der Drahtlack 15 bis 75 Gew.-%, bezogen auf den Drahtlack, eines Polyesterimids gemäß Anspruch 4 enthält.

6. Drahtlack nach einem der Ansprüche 4 oder 5, **dadurch gekennzeichnet, daß** der Drahtlack 0,5 bis 5 Gew.-%, bezogen auf den Drahtlack, eines Phenolharzes und/oder Melaminharzes enthält.

7. Drahtlack nach einem der Ansprüche 4 bis 6, **dadurch gekennzeichnet, daß** der Drahtlack organische Lösemittel oder Lösemittelgemische enthält.

8. Drahtlack nach einem der Ansprüche 4 bis 7, **dadurch gekennzeichnet, daß** der Drahtlack 0 bis 2,5 Gew.-%, bezogen auf den Drahtlack, Katalysator enthält.

9. Drahtlack nach einem der Ansprüche 4 bis 8, **dadurch gekennzeichnet, daß** der Drahtlack aufgebaut ist aus:
(A): 35 bis 55 Gew.-% des Polyesterimidharzes,
(B): 0,1 bis 1,5 Gew.-% eines Katalysators,
(C): organischem Lösemittel oder Lösemittelgemisch,
(D): 1 bis 4 Gew.-% des Phenolharzes und/oder Melaminharzes, sowie
(E): 0 bis 1 Gew.-% an üblichen Additiven und Hilfsmitteln,
wobei die Summe der Komponenten (A) bis (E) 100 Gew.-% des Drahtlackes ausmacht.

10. Drahtlack nach einem der Ansprüche 1, 3, 6, 7 und 8, **dadurch gekennzeichnet, daß** der Drahtlack aufgebaut ist aus:
(F): 25 bis 35 Gew.-% des Polyamidimidharzes,
(G): 0,1 bis 1,5 Gew.-% eines Katalysators,
(H): organischem Lösemittel oder Lösemittelgemisch,
(I): 1 bis 4 Gew.-% des Phenolharzes und/oder Melaminharzes, sowie
(K): 0 bis 1 Gew.-% an üblichen Additiven und Hilfsmitteln,
wobei die Summe der Komponenten (F) bis (K) 100 Gew.-% des Drahtlackes ausmacht.

11. Verwendung der Drahtlacke nach einem der Ansprüche 1 bis 10 zur Beschichtung von Kupferdrähten, insbesondere von starken Runddrähten oder Profildrähten.

## Claims

1. Wire enamel, comprising as binders polyesterimide, polyamideimide or polyesterimide and polyamideimide, **characterized in that** the polyesterimide and the polyamideimide comprises as monomeric building block polyoxyalkylenediamine having terminal amino groups, and, where the binder used comprises polyamideimide without polyesterimide, the polyamideimide is prepared with diisocyanate building blocks and from 0.5 to 50 mol%, based on the diisocyanate, are substituted by polyoxyalkylenediamine.

2. Wire enamel according to claim 1, **characterized in that**, where polyesterimide and polyamideimide are used as binders, the polyamideimide is prepared with diisocyanate building blocks and from 0.5 to 50 mol%, based on the diisocyanate, are substituted by polyoxyalkylenediamine.

3. Wire enamel according to claim 1 or 2, **characterized in that** the polyoxyalkylenediamine having terminal amino groups is selected from the group polyoxyethylenediamine, polyoxypropylenediamine and/or polyoxyethylenepropylenediamine.

4. Wire enamel according to one of claims 1 to 3, **characterized in that** from 0.5 to 100% by weight, based on the diamine building blocks, of the monomeric diamine building blocks present in the polyesterimide consist of the polyoxyalkylenediamine in accordance with one of claims 1 to 3.

5. Wire enamel according to claim 4, **characterized in that** the wire enamel contains from 15 to 75% by weight, based on the wire enamel, of a polyesterimide in accordance with claim 4.

6. Wire enamel according to one of claims 4 or 5, **characterized in that** the wire enamel contains from 0.5 to 5% by weight, based on the wire enamel, of a phenolic resin and/or melamine resin.

7. Wire enamel according to one of claims 4 to 6, **characterized in that** the wire enamel contains organic solvents or solvent mixtures.

8. Wire enamel according to one of claims 4 to 7, **characterized in that** the wire enamel contains from 0 to 2.5% by weight, based on the wire enamel, of catalyst.

9. Wire enamel according to one of claims 4 to 8, **characterized in that** the wire enamel is composed of:
(A) : 35 to 55% by weight of the polyesterimide resin,
(B): 0.1 to 1.5% by weight of a catalyst,
(C) : organic solvent or solvent mixture,
(D) : 1 to 4% by weight of the phenolic resin and/or melamine resin, and
(E) : 0 to 1% by weight of customary additives and auxiliaries,
the sum of components (A) to (E) making up 100% by weight of the wire enamel.

10. Wire enamel according to one of claims 1, 3, 6, 7 and 8, **characterized in that** the wire enamel is composed of:
(F) : 25 to 35% by weight of the polyamideimide resin,
(G) : 0 to 1.5% by weight of a catalyst,
(H): organic solvent or solvent mixture,
(I):1 to 4% by weight of the phenolic resin and/or melamine resin, and
(K) : 0 to 1% by weight of customary additives and auxiliaries,
the sum of components (F) to (K) making up 100% by weight of the wire enamel.

11. Use of the wire enamels according to one of claims 1 to 10 for coating copper wires, especially thick round wires or profiled wires.

## Revendications

1. Vernis isolant comprenant, en tant que liant, un polyesterimide, un polyamide-imide ou un polyesterimide et un polyamide-imide, **caractérisé en ce que** le polyesterimide et le polyamide-imide renferment, en tant qu'élément structural monomère, une polyoxyalkylènediamine ayant des groupes amino terminaux, où, dans le cas où un polyamide-imide est utilisé sans polyesterimide en tant que liant, le polyamide-imide est préparé avec des éléments structuraux diisocyanate et de 0,5 à 50% en moles, par rapport au diisocyanate, en sont substitués par une polyoxyalkylènediamine.

2. Vernis isolant selon la revendication 1, **caractérisé en ce que**, au cas où un polyesterimide et un polyamide-imide sont utilisés en tant que liant, le polyamide-imide est préparé avec des éléments structuraux diisocyanate et de 0,5 à 50% en moles, par rapport au diisocyanate, en sont substitués par une polyoxyalkylènediamine.

3. Vernis isolant selon la revendication 1 ou 2, **caractérisé en ce que** la polyoxyalkylènediamine ayant des groupes amino terminaux est choisie parmi le groupe constitué de la polyoxyéthylènediamine, de la polyoxypropylènediamine et/ou de la polyoxyéthylènepropylènediamine.

4. Vernis isolant selon l'une quelconque des revendications 1 à 3, **caractérisé en ce que** de 0,5 à 100% en poids, par rapport aux éléments structuraux diamine, des éléments structuraux diamine monomères présents dans le polyesterimide sont constitués de la polyoxyalkylènediamine selon l'une quelconque des revendications 1 à 3.

5. Vernis isolant selon la revendication 4, **caractérisé en ce que** le vernis isolant comprend de 15 à 75% en poids, par rapport au vernis isolant, d'un polyesterimide selon la revendication 4.

6. Vernis isolant selon l'une quelconque des revendications 4 ou 5, **caractérisé en ce que** le vernis isolant comprend de 0,5 à 5% en poids, par rapport au vernis isolant, d'une résine phénolique et/ou d'une résine mélaminique.

7. Vernis isolant selon l'une quelconque des revendications 4 à 6, **caractérisé en ce que** le vernis isolant comprend un solvant ou des mélanges de solvants organiques.

8. Vernis isolant selon l'une quelconque des revendications 4 à 7, **caractérisé en ce que** le vernis isolant comprend de 0 à 2,5% en poids, par rapport au vernis isolant, de catalyseur.

9. Vernis isolant selon l'une quelconque des revendications 4 à 8, **caractérisé en ce que** le vernis isolant est composé de :
(A) : de 35 à 55% en poids de la résine de polyesterimide,
(B) : de 0,1 à 1,5% en poids d'un catalyseur,
(C) : un solvant ou un mélange de solvants organiques,
(D) : de 1 à 4% en poids de la résine phénolique et/ou de la résine mélaminique, ainsi que
(E) : de 0 à 1% en poids d'additifs et d'auxiliaires habituels,
la somme des composants (A) à (E) constituant 100% en poids du vernis isolant.

10. Vernis isolant selon l'une quelconque des revendications 1, 3, 6, 7 et 8, **caractérisé en ce que** le vernis isolant est composé de :
(F) : de 25 à 35% en poids de la résine de polyesterimide,
(G) : de 0,1 à 1,5% en poids d'un catalyseur,
(H) : un solvant ou un mélange de solvants organiques,
(I) : de 1 à 4% en poids de la résine phénolique et/ou de la résine mélaminique, ainsi que
(K) : de 0 à 1% en poids d'additifs et d'auxiliaires habituels,
la somme des composants (F) à (K) constituant 100% en poids du vernis isolant.

11. Utilisation des vernis isolants selon l'une quelconque des revendications 1 à 10 pour le revêtement de fils de cuivre, en particulier de fils profilés ou de fils ronds épais.
